# EUROPEAN PATENT SPECIFICATION

(11) **EP 4 604 811 B1**
(45) Date of publication and mention of the grant of the patent: **09.09.2026**
(21) Application number: 23799018.9
(22) Date of filing: 11.10.2023
(51) Int. Cl.: A47J 31/44, A47J 31/46

(54) **FLUIDIC CONDUIT FOR DISPENSING HOT WATER, DISPENSING GROUP, COFFEE MACHINE, RECIRCULATION METHOD, AND METHOD FOR DISPENSING HOT WATER**
FLUIDLEITUNG ZUR AUSGABE VON HEISSWASSER, AUSGABEGRUPPE, KAFFEEMASCHINE, REZIRKULATIONSVERFAHREN UND VERFAHREN ZUR AUSGABE VON HEISSWASSER
CONDUITE FLUIDIQUE POUR DISTRIBUTION D'EAU CHAUDE, GROUPE DE DISTRIBUTION, MACHINE À CAFÉ, PROCÉDÉ DE RECIRCULATION ET PROCÉDÉ DE DISTRIBUTION D'EAU CHAUDE

(30) Priority: 18.10.2022 IT 202200021438
(43) Date of publication of application: 27.08.2025
(73) Proprietor: Illycaffe' S.p.A., 34147 Trieste (IT)
(72) Inventor: BRACICH, Christian, 34147 Trieste (IT); PIRAS, Riccardo, 34147 Trieste (IT); CESCUTTI, Francesco, 34147 Trieste (IT); FERRARI, Marco, 34147 Trieste (IT); RONCALI, Eugenio, 34147 Trieste (IT)
(74) Representative: Crippa, Paolo Ernesto
(86) International application number: PCT/IB2023/060228
(87) International publication number: WO 2024/084341

(56) References cited:
- EP-B1- 1 684 621
- WO-A1-2017/189628
- DE-A1- 2 747 990
- US-A1- 2006 286 261

## Description

### Field of application

The present invention relates to a fluidic conduit for dispensing hot water, a dispensing group for dispensing hot water and preferably steam, a recirculation method, a method for dispensing hot water, and a coffee machine.

In particular, the present invention belongs to the field of distributing hot beverages at a professional level, e.g., for bars, restaurants, and automatic vending machines or, at a domestic level, e.g., for domestic use.

Hot water distribution systems are known in the art and are generally integrated into the same dispensing group, often coupled to a steam distribution system. The document US 2006/286261 A1 discloses a hot water distribution system for beverage production. Generally, the known dispensing groups consist of a single fluidic conduit, which supplies two dispensing nozzles, for alternately dispensing hot water and steam.

Typically, in fact, known dispensing groups allow dispensing hot water or dispensing steam at different times because, as they generally have a single fluidic conduit supplying both dispensing operations, the water flow rates in the circuit are not sufficient to supply both dispensing operations, and it is simultaneously complicated and costly to heat and pump water in the same fluidic conduit at two different temperatures.

According to a further disadvantage, the known dispensing systems use heaters for heating containers for receiving the beverages, i.e., for keeping the mugs, cups, and glasses warm, so as to ensure keeping the beverages hot after being served to the end user, besides improving the feeling of comfort felt by grasping such containers.

Such heaters clearly require a special, thus costly supply and require ad hoc maintenance.

Moreover, boilers or storage boilers are often used in the known dispensing systems, in which great amounts of heated water are stored, in the same volume, which remains in the respective storage tank for a long time before being dispensed.

It is known that such systems can develop bacteriological loads, and even if the problem is under control and the known boilers and hot water heaters respect the health and safety standards, such systems require a specific control of the microbiological risk.

Moreover, such a drawback forces users to perform continuous and frequent cleaning cycles, resulting in waste in terms of time and resources.

### Solution of the invention

Thus, the need is strongly felt to provide a dispensing group capable of overcoming the drawbacks typical of the prior art.

In particular, it is the object of the present invention to improve the efficiency of the dispensing group, optimize the powers at stake for heating the water for the dispensing operations and, simultaneously, utilize the heat of combustion of the water to the full potential.

It is a further object of the present invention to allow the simultaneous dispensing of hot water and steam.

Such needs are met by a fluidic water conduit, a dispensing group, a coffee machine, a recirculation method, and a method for dispensing hot water according to the appended claims. The claims dependent thereon describe preferred or advantageous embodiments of the invention, involving further advantageous aspects.

### Description of the drawings

The features and advantages of the water fluidic conduit, the dispensing group, the coffee machine, the recirculation method, and the dispensing method will however become apparent from the following description of some preferred embodiments thereof, given by way of non-limiting indications, with reference to the accompanying drawings, in which:
- figure 1 shows a fluidic circuit diagram of a dispensing group according to an embodiment of the present invention;
- figure 2 shows a fluidic circuit diagram of a fluidic water conduit according to an embodiment of the present invention;
- figure 3 shows a fluidic circuit diagram of a fluidic steam conduit of a dispensing group according to an embodiment of the present invention;

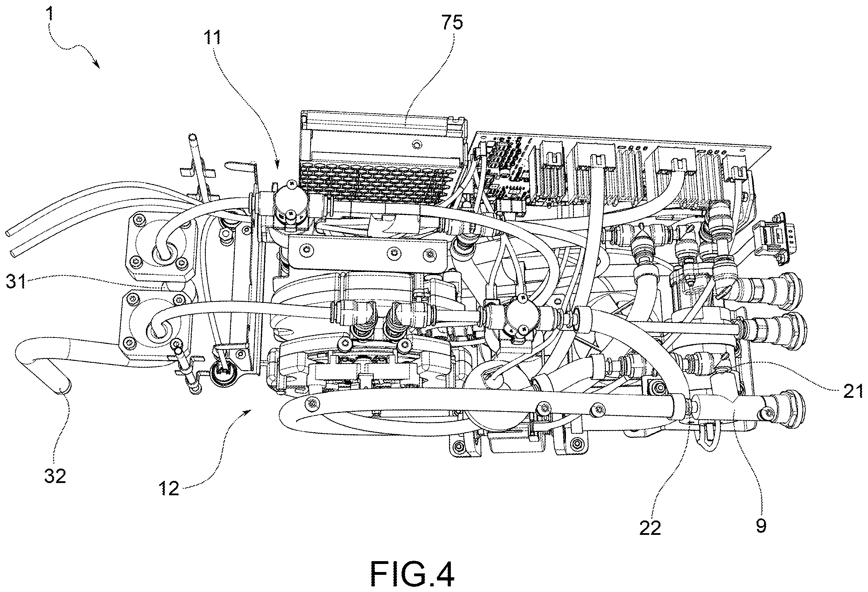

- figure 4 shows a perspective view of a dispensing group according to an embodiment of the present invention;
- figure 5a shows a lateral perspective view of a fluidic water conduit according to an embodiment of the present invention;
- figure 5b shows a further lateral perspective view of the fluidic water conduit in figure 5a;
- figure 5c shows a view from above of the fluidic water conduit in figure 5a;
- figure 6 shows a lateral perspective view of a fluidic steam conduit according to an embodiment of the present invention;

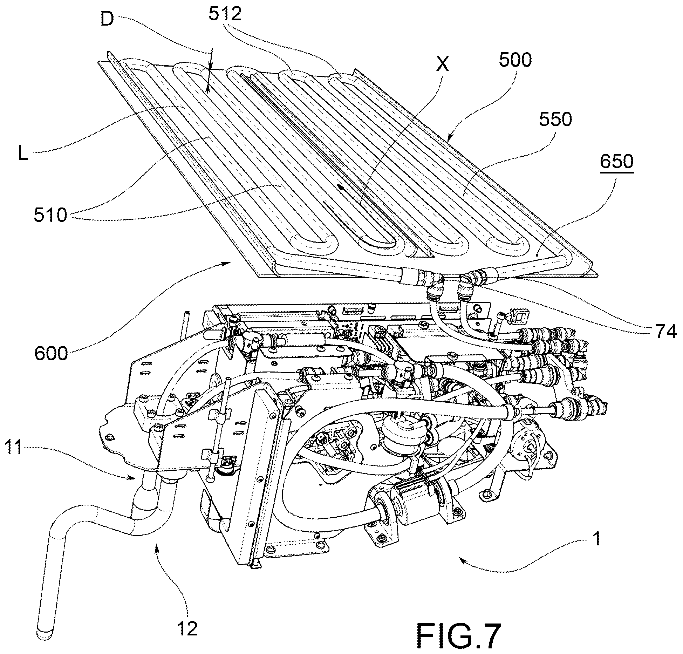

- figure 7 shows a perspective view of a dispensing group of the present invention, in an embodiment of the present invention;

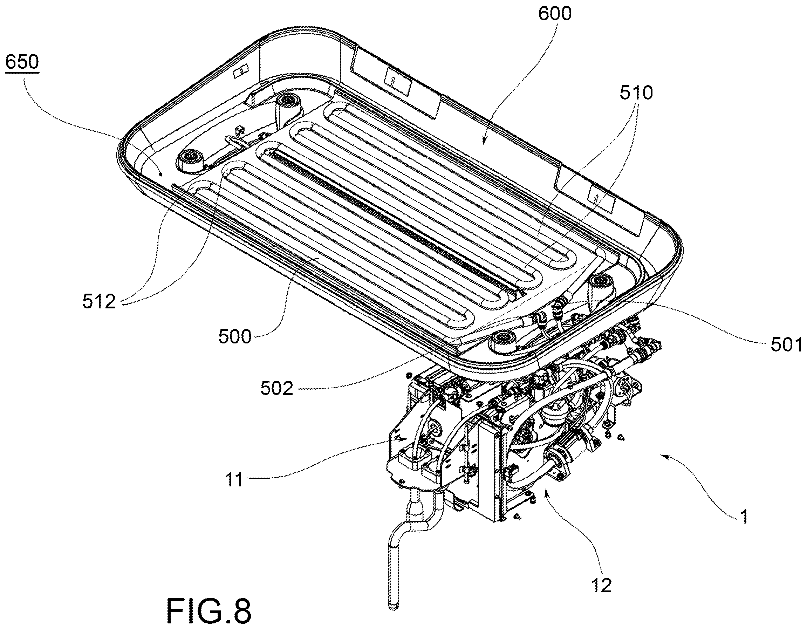

- figure 8 shows a perspective view of the dispensing group in figure 7, depicting the collection conduit arranged at a cup holder unit, according to an embodiment of the present invention;
- figure 9 shows a perspective view of a coffee machine according to an embodiment of the present invention;
- figure 10 shows a fluidic circuit diagram of a dispensing group according to a further embodiment of the present invention;
- figure 11 shows a fluidic circuit diagram of a dispensing group according to a further embodiment of the present invention;
- figure 12 shows a fluidic circuit diagram of a dispensing group according to a further embodiment of the present invention.

### Detailed description

With reference to the aforesaid figures, reference numeral 11 globally denotes a fluidic conduit, referred to as the fluidic water conduit 11 for simplicity and intelligibility, for dispensing hot water.

According to the present invention, the fluidic water conduit 11 comprises:
- a main branch 110 extending between a first water inlet opening 21 and a hot water dispensing opening 31 and which is suitable for receiving water through said first water inlet opening 21 and allowing said water to flow towards said hot water dispensing opening 31;
- a first heating device 41, operatively connected to said main branch 110 and suitable for heating the water flowing into said main branch 110 before it reaches said hot water dispensing opening 31;
- a recirculation branch 115, which fluidically originates from said main branch 110 downstream of the first heating device 41 and upstream of the hot water dispensing opening 31 and which is fluidically reintroduced into said main branch 110 upstream of said first heating device 41.

In other words, according to an advantageous aspect, the present invention provides that the fluidic water conduit 11 is equipped with a recirculation, i.e., it is suitable for recirculating preheated water by means of the first heating device 41, through said recirculation branch 115, and reintroducing such a preheated water into the main branch 110.

Advantageously, by virtue of the presence of the recirculation branch, which always provides a certain flow of preheated water for the dispensing, the fluidic conduit according to the present invention is capable of significantly reducing the time for dispensing hot water at a high temperature.

For example, by means of the first heating device 41 it is possible to preheat water to about 60°C and send it into recirculation in the recirculation branch 115, subsequently reaching the main branch 110 again.

Thereby, when the dispensing of hot water, typically boiling water, is requested, preferably about 90-95°C, for preparing hot beverages, such as teas or herbal drinks, it is possible to apply a reduced final heating to the previously preheated water, by means of the first heating device 41.

Advantageously, such a feature of the fluidic water conduit also allows utilizing heating devices with reduced powers, as compared to the typical heaters of the prior art, at the same required dispensing temperature.

According to the invention, the main branch 110 comprises a collection conduit 500, suitable for accumulating water preheated by the first heating device 41 and reintroduced into the main branch 110 by means of the recirculation branch 115, said collection conduit 500 being at least partially thermally conductive for allowing the transmission of heat of the heated hot water accumulated in the collection conduit 500, towards the environment.

In other words, the collection conduit 500 is at least partially not insulated, i.e., it comprises at least one exchange wall 550 suitable for allowing the heat exchange between the heated water inside the collection conduit 500 and the environment, through said exchange wall 550.

More generally, the expression "towards the environment" is understood to mean "towards the outside of the collection conduit", i.e., towards any chamber, or element, arranged outside said conduit.

Preferably, the whole outer wall of the collection conduit is suitable for allowing the heat exchange, i.e., the whole collection conduit is not insulated.

Advantageously, by virtue of such a feature, the heated water stored in the collection conduit 500 can be exploited for a dual purpose: on the one hand, a certain flow of preheated water is provided to allow hot water to be dispensed more quickly at a high temperature, on the other hand, the use of the heat of combustion of the heated water in the collection conduit 500 is allowed to transmit heat passively to elements close to such a collection conduit, which need to be heated, like other fluidic conduits or further dispensing group elements, such as a cup holder unit, for example, as is better explained later in the present discussion.

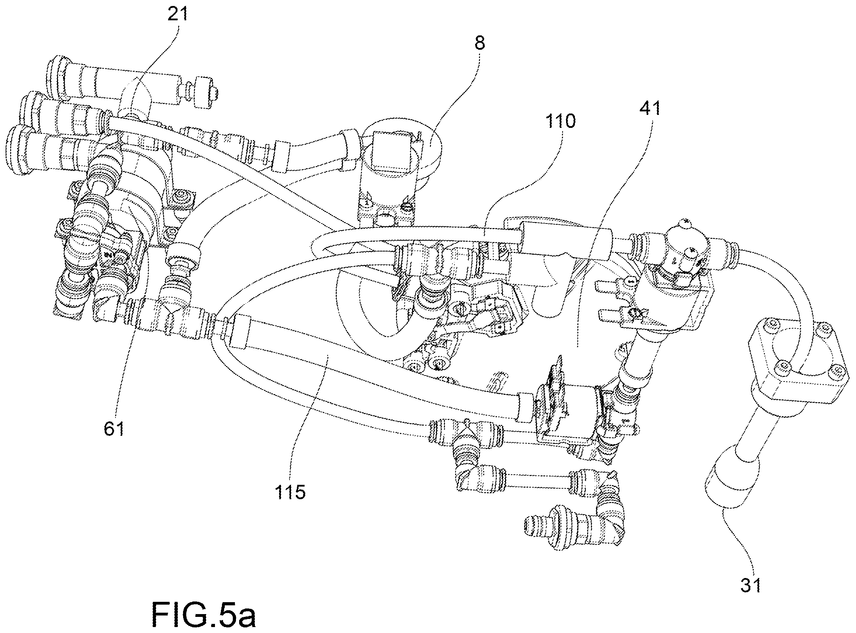

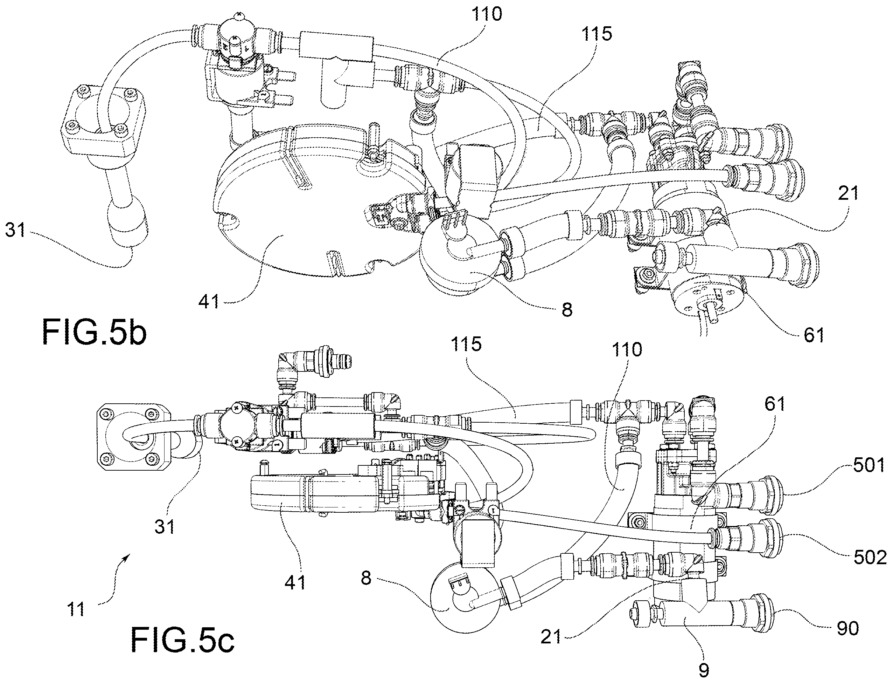

Preferably, as shown for example in figures 5a, 5b and 5c, the hot water dispensing opening 31 is connected to, or obtained in, a hot water outlet nozzle, designed to direct a flow of hot water to a collection container, e.g., a cup or a glass.

In an embodiment of the invention, the first heating device 41 is installed close to the hot water dispensing opening 31.

Preferably, the first heating device 41 is an instantaneous heater, even more preferably, it is a heater of the FTH *(Flow Through Heater)* type.

In a preferred embodiment, the fluidic water conduit 11 comprises a first pump 61, preferably a rotary pump, installed upstream of the first heating device 41 and suitable for pushing water into the main branch 110 towards said first heating device 41.

In a preferred embodiment, the recirculation branch 115 is reintroduced into the main branch 110 upstream of said first pump 61.

In this document, the expressions "upstream" and "downstream" are always used with reference to the water flow direction from the first and second water inlet openings 21, 22 towards the hot water dispensing opening 31 or towards the steam dispensing opening 32, respectively.

Moreover, in a preferred embodiment, the collection conduit 500 is interposed between the first pump 61 and the first heating device 41.

Advantageously, by virtue of the presence of the first pump 61 it is possible to regulate the hot water dispensing time by acting both on the power of the first heating device 41 and on the power of the first pump 61.

Preferably, the collection conduit 500 is a tube extending over a collection length L along a prevalent flow direction X and having a cross-section on a plane transverse to said prevalent flow direction X defined by a transverse dimension D, where said collection length L is much greater than said transverse dimension D.

It is apparent that prevalent flow direction X does not only mean a linear direction, but it also refers to a sinuous direction, e.g., a curved or broken or mixed trajectory, comprising linear and/or curved and/or broken stretches, which follows the direction of the water flow in the conduit.

For example, the collection conduit 500 is a tube having a collection length L along the prevalent flow direction X and having a circular cross-section defined by a diameter D, where the length L is much greater than the diameter D. In other words, the collection conduit is a long and narrow tube.

In a preferred embodiment, the collection length L is at least ten times the transverse dimension D, preferably at least fifty times the transverse dimension D, even more preferably, at least one hundred times the transverse dimension D.

Preferably, the collection conduit 500 has a meandering development, i.e., it forms a fluidic serpentine, comprising linear stretches 510 interspersed with curvilinear stretches 520.

In an embodiment, the collection conduit 500 extends from a first end 501 to a second end 502.

Preferably, at said first and second ends 501, 502, the fluidic water conduit 11 comprises non-return valves 74 suitable for being opened and closed for allowing or blocking the passage of preheated water, respectively, from the recirculation branch towards the collection conduit 500 and from the collection conduit 500 towards the first heating device 41.

Moreover, in an embodiment, the main branch 110 comprises an emission node 300 downstream of the first heating device 41 and upstream of the hot water dispensing opening 31, where the recirculation branch 115 fluidically originates from the main branch 110 at said emission node 300.

Preferably, the fluidic water conduit 11 comprises a flow regulating element 71 at said emission node 300, suitable for regulating the water flow from the main branch 110 towards the hot water dispensing opening 31 or towards the recirculation branch 115.

In an advantageous embodiment, such a flow regulating element 71 is a three-way valve.

Preferably, the fluidic water conduit 11 comprises an electronic control unit 75 operatively connected to said flow regulating element 71 and configured to process and send to said flow regulating element 71:
- a dispensing signal for allowing water to pass from the main branch 110 towards the hot water dispensing opening 31; or
- a recirculation signal for allowing water to pass from the main branch 110 towards the recirculation branch 115.

Moreover, in a preferred embodiment, the fluidic water conduit 1 according to the preceding claim comprises a hot water temperature sensor 700, installed on the fluidic water conduit 11 and configured to detect the temperature of the water in the main branch 110, downstream of the first heating device 41.

The present invention also relates to a dispensing group 1 for dispensing hot water, comprising a fluidic water conduit 11 according to an embodiment of the present invention and a cup holder unit 600 arranged close to the collection conduit 500 so that the heating of at least one surface of said cup holder unit 600 is allowed by means of the transmission of heat from the water contained in said collection conduit 500 towards said cup holder unit 600.

In a preferred embodiment, the cup holder unit 600 comprises and delimits therein a heating chamber 650 suitable for accommodating the collection conduit 500 and closed at the top by means of a cup holder plate 680, so as to conceal the collection conduit 500 from the user's sight, where said cup holder plate 680 is suitable for holding mugs, cups, glasses, to be heated.

Preferably, the dispensing group 1 is also suitable for dispensing steam and further comprises:
- a fluidic steam conduit 12 extending between a second water inlet opening 22 and a steam dispensing opening 32, said fluidic steam conduit 12 being suitable for receiving water through said second water inlet opening 22 and allowing said water to flow towards said steam dispensing opening 32;
- a second heating device 42, operatively connected to said fluidic steam conduit 12 and suitable for heating the water flowing into said fluidic steam conduit 12 to generate steam, before it reaches said steam dispensing opening 32.

Thereby, the dispensing group 1 is also suitable for dispensing steam, through the steam dispensing opening 32, which is different to the hot water dispensing opening 31.

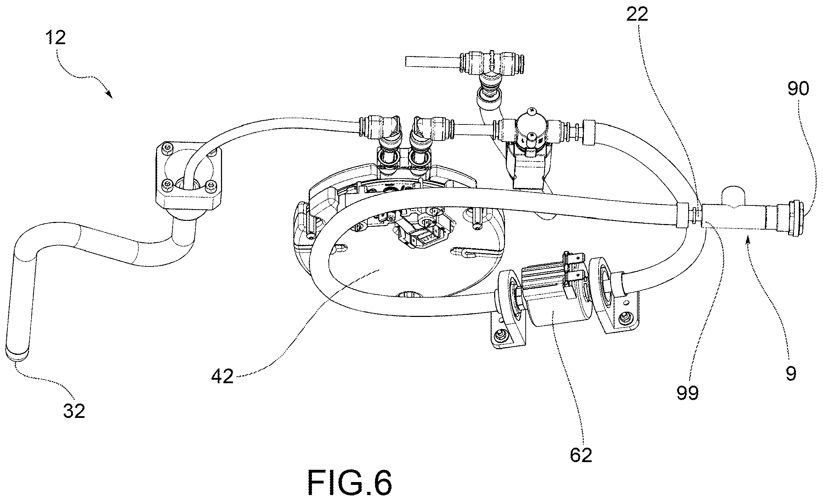

Preferably, as shown for example in figure 6, the steam dispensing opening 32 is connected to, or obtained in, a steam outlet nozzle, designed to direct a flow of steam into a fluid contained in a collection container, e.g., a cup or a glass, or a pan containing milk.

In an embodiment of the invention, the second heating device 42 is installed close to the steam dispensing opening 32.

Preferably, the second heating device 42 is an instantaneous heater, even more preferably, it is a heater of the FTH *(Flow Through Heater)* type.

In a particularly advantageous embodiment, the fluidic water conduit 11 and the fluidic steam conduit 12 are fluidically and thermally separate from each other in the path thereof between the first water inlet opening 21 and the hot water dispensing opening 31, and between the second water inlet opening 22 and the steam dispensing opening 32, respectively.

In other words, according to the present embodiment, the dispensing group 1 comprises two fluidic conduits, which are kept fluidically and thermally separate from each other, the fluidic water conduit 11 for producing and dispensing hot water, and the fluidic steam conduit 12 for producing and dispensing steam.

The definition "fluidically separate" is understood to mean that such fluidic water and steam conduits 11, 12 do not have fluidic nodes in common along the respective path thereof. That is, for example, the water entering the fluidic water conduit 11 cannot reach the fluidic steam conduit 12, and vice versa.

The definition "thermally separate" is understood to mean that such fluidic water and steam conduits 11, 12 do not directly influence each other, i.e., they do not contribute directly to heating or, more generally, to varying the temperature of the other, or of the water flowing therein. In other words, for example, the first heating device 41 only thermally influences the water flowing in the fluidic water conduit 11. Likewise, the second heating device 42 only thermally influences the water flowing into the fluidic steam conduit 12.

In an embodiment, described in detail in this document below, the fluidic conduits are kept fluidically and thermally separate, but the fluidic steam conduit 12 is heated indirectly, in a preheating stretch 120 - in a passive manner - by means of the transmission of heat from the collection conduit 500 towards said preheating stretch 120.

Moreover, according to an advantageous embodiment, the first heating device 41 and the second heating device 42 are completely disconnected from each other both fluidically and thermally.

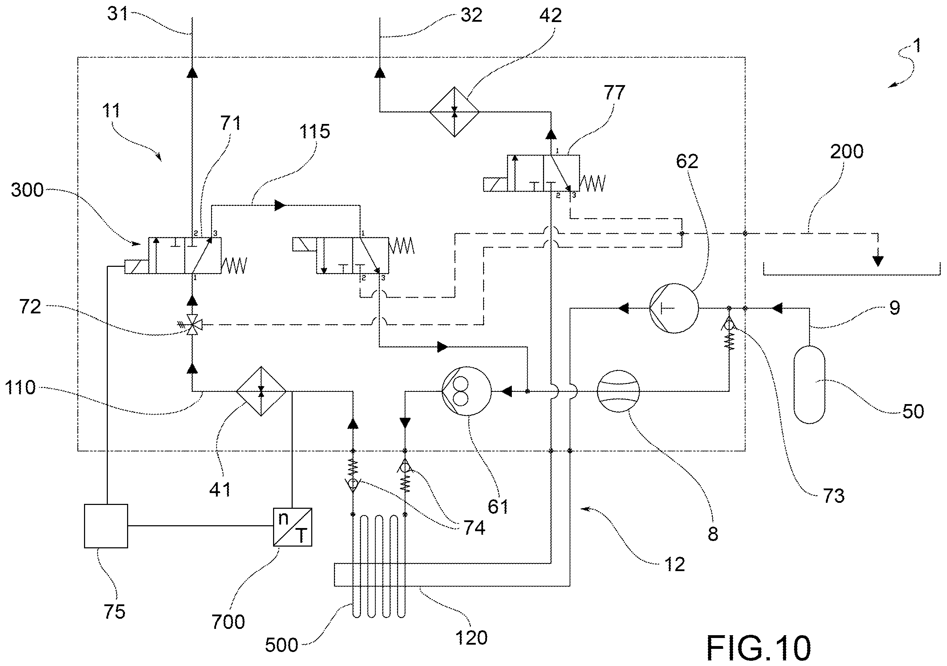

In an embodiment, for example shown in figure 10, the fluidic steam conduit 12 comprises a preheating stretch 120 passing close to the collection conduit 500, so that the collection conduit 500 allows heat to be transferred from the preheated water therein, to the preheating stretch 120, so as to also ensure a minimum preheating of the water flowing into the fluidic steam conduit 12.

In such an embodiment, the collection conduit 500 is suitable for allowing heat to be transferred from the preheated water therein to the preheating stretch 120, so as to also allow preheating the water flowing into the fluidic steam conduit 12. That is, the fluidic water conduit 11 and the fluidic steam conduit 12 are kept thermally and fluidically separate and the fluidic steam conduit 12 undergoes a passive preheating by proximity to said collection conduit 500.

Thereby, the dispensing of steam is also facilitated and, at the same final dispensing temperature, it allows using a heater with reduced power as compared to the heaters used in the prior art for generating steam.

In an embodiment, the dispensing group 1 further comprises an overpressure relief valve 72 installed on the fluidic water conduit 11, preferably downstream of the first pump 61, even more preferably downstream of the collection conduit 500.

In an embodiment, the dispensing group comprises a discharge branch 200, fluidically connectable to the fluidic water conduit 11 and/or to the fluidic steam conduit 12 for allowing water and/or steam to be released, if necessary.

Preferably, the overpressure relief valve 72 is suitable for regulating the flow of hot water from the main branch 110 towards the hot water dispensing opening 31, or towards the recirculation branch 115 or towards the discharge branch 200, where necessary.

In an embodiment, the dispensing group 1 comprises a steam regulating element 77 installed on the fluidic steam conduit 12, preferably downstream of the second pump 62.

Preferably, such a steam regulating element 77 is suitable for regulating the water flow towards the steam dispensing opening 32, flowing from the second heating device 42, or towards the discharge branch 200.

In an embodiment, the fluidic steam conduit 12 originates from the fluidic water conduit 11 at the collection conduit 500.

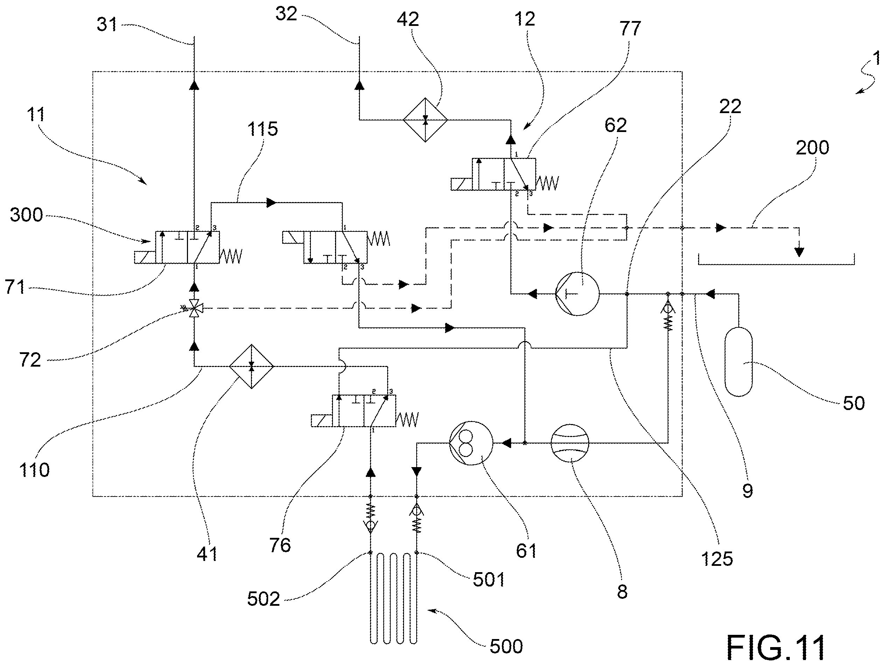

In an embodiment, for example shown in figure 11, the fluidic steam conduit 12 comprises a tapping branch 125 with which it is connected to the fluidic water conduit 11 downstream of the collection conduit 500.

In other words, the fluidic steam conduit 12 is connected to the collection conduit 500 or downstream of the latter and is suitable for receiving water from the collection conduit 500 through the second water inlet opening 22, so that the fluidic steam conduit 12 receives water that has been preheated by means of the first heating device 41 in the fluidic water conduit 11 and performs a final heating by means of the second heating device 42, to transform the preheated water into steam.

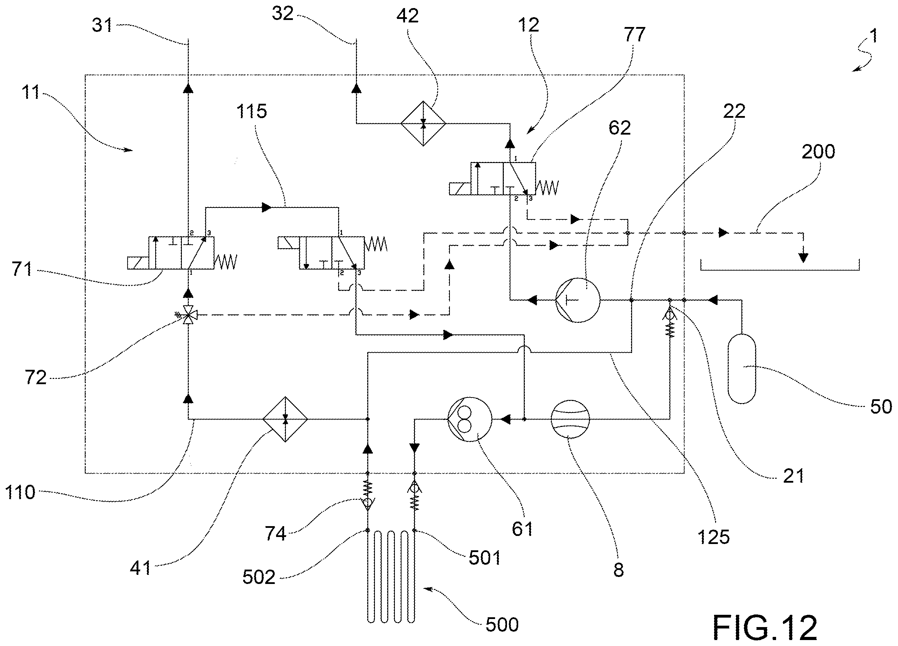

Preferably, the dispensing group 1 comprises an auxiliary regulating element 76 suitable for regulating the preheated flow of water accumulated in the collection conduit 500 towards the hot water dispensing opening 31 or towards the fluidic steam conduit 12. Therefore, such an auxiliary regulating element 76 is preferably installed at the connection between the tapping branch 125 and the fluidic conduit 11, as shown in the embodiment in figure 12.

According to an embodiment, the electronic control unit 75 is connected to a user interface by means of which a user can send, to the dispensing group (or to the fluidic water conduit), a hot water dispensing command, and/or he/she can manually command the flow regulating element 71 to regulate the passage of water towards the hot water dispensing opening or towards the recirculation branch.

In an embodiment, the dispensing group 1 comprises a tank 50, preferably containing water at room temperature or cold water, fluidically connected to the fluidic water conduit 11 by means of the first water inlet opening 21, and to the fluidic steam conduit 12 by means of the second water inlet opening 22.

In other words, in such an embodiment, each fluidic water and steam conduit 11, 12 is directly connected to the tank 50 by means of the respective water inlet opening 21, 22.

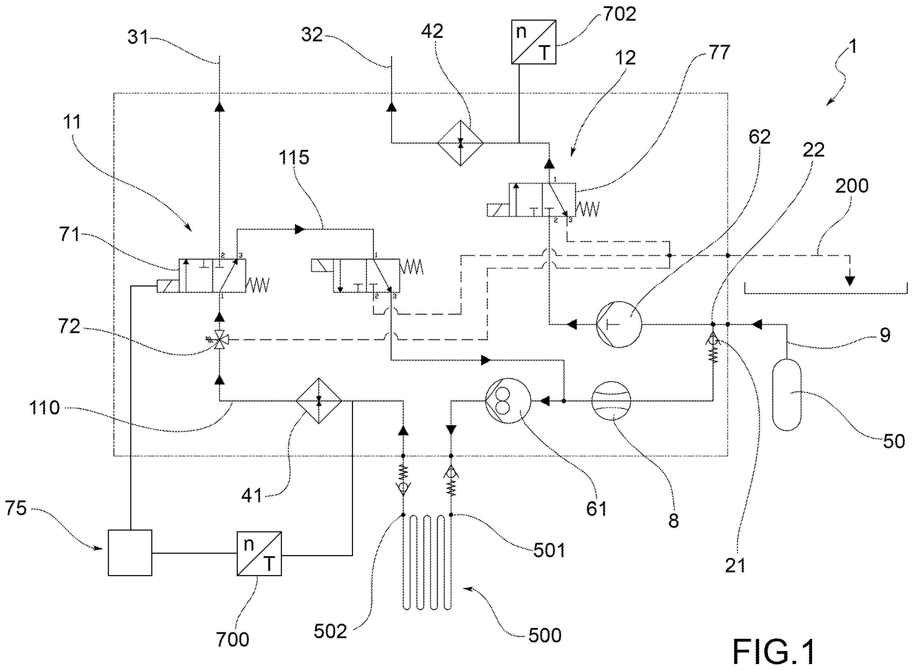

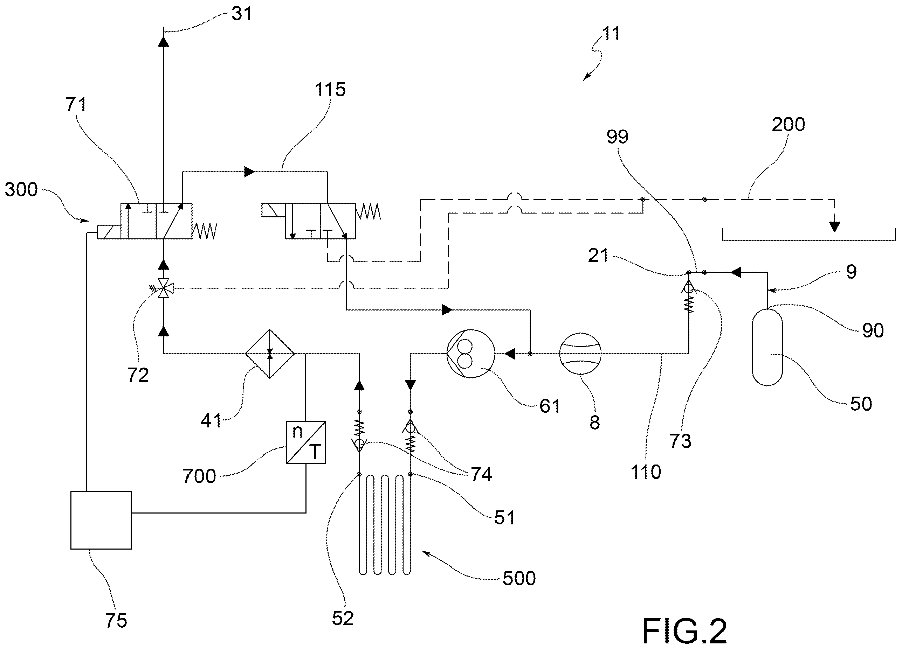

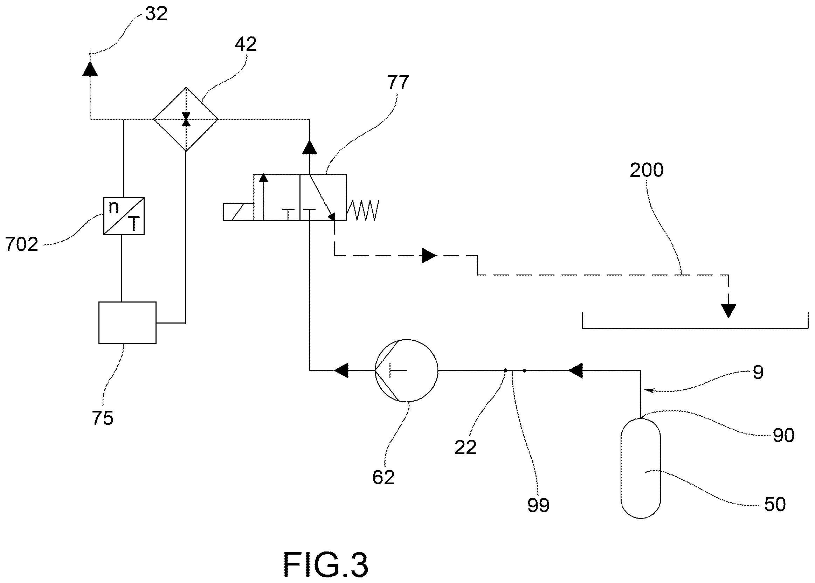

In an embodiment, for example shown in figures 1, 2 and 3, the dispensing group 1 comprises a junction conduit 9 having a first end 90, fluidically connected to the tank 50, which is suitable for containing water, and a second end 99, fluidically connected to the fluidic water conduit 11 and to the fluidic steam conduit 12 by means of the first 21 and second 22 water inlet openings, respectively.

Such a junction conduit 9 is suitable for indirectly connecting the fluidic water conduit 11 and the fluidic steam conduit 12 to the tank 50.

Preferably, the first opening 21 and the second water inlet opening 22 are both connected to the same second end 99 of the junction conduit 9.

Preferably, a regulating valve is installed at such a second end 99, which is suitable for regulating the water flow from the tank 50 towards the fluidic water conduit 11 through said first water inlet opening 21, and/or towards the fluidic steam conduit 12 through said second water inlet opening 22.

In an advantageous embodiment, the regulating valve is suitable for allowing the simultaneous flow in both the fluidic water conduit 11 and the fluidic steam conduit 12.

Thereby, advantageously, also by virtue of the separation between the two fluidic conduits 11 and 12 and by virtue of the presence of the thermally separate first heating device 41 and second heating device 42, the simultaneous dispensing of hot water is allowed through the hot water dispensing opening 31 and steam through the steam dispensing opening 32.

Moreover, a non-return valve 73 is preferably installed at the first water inlet opening 21, suitable for blocking the return of the water entering the fluidic water conduit 11, towards the tank 50 or towards the fluidic steam conduit 12.

In an embodiment, the fluidic steam conduit 12 comprises a second pump 62, preferably a volumetric pump, installed upstream of the second heating device 42 and suitable for pushing water into the fluidic steam conduit 12 towards said second heating device 42.

In an embodiment, the dispensing group 1 comprises one or more steam temperature sensors 702, installed on the fluidic steam conduit 12 and configured to detect the temperature of the water in the fluidic steam conduit 12, upstream of the second heating device 42, close thereto.

Preferably, the electronic control unit 75 is connected to said one or more steam temperature sensors 702 and is configured to regulate the flow rate passing from the second heating device 42 as a function of the temperature detected by said one or more steam temperature sensors 702.

Preferably, the flow rate passing from the second heating device 42 is regulated by acting on the power of the second pump 62.

In a constructional variant, the dispensing group 1 further comprises a flow rate measurer 8, e.g., a flow meter installed on the fluidic water conduit 11.

Preferably, such a flow rate measurer 8 is installed on the main branch 110, even more preferably, upstream of the first pump 61.

In an embodiment, the recirculation branch 115 is reintroduced into the main branch 110 downstream of said flow rate measurer 8 and upstream of the first pump 61.

In a constructional variant, the dispensing group comprises a flow rate measurer 8 installed on the junction conduit 9.

In an advantageous embodiment, the fluidic water conduit 11 and the fluidic steam conduit 12 are separate at least from a node downstream of the flow rate measurer 8.

The present invention also relates to a preheated water recirculation conduit, comprising the following steps:
a) providing a fluidic water conduit 11 according to the present invention;
b) allowing water to pass into the main branch 110 from the first water inlet opening 21 towards the hot water dispensing opening 31;
c) by means of the first heating device 41, pre-heating the water flowing into said main branch 110 to generate an amount of preheated water at a predetermined preheating temperature;
d) blocking the passage of said amount of preheated water towards the hot water dispensing opening 31 and allowing said amount of preheated water to pass from the main branch 110, downstream of the first heating device 41, into the recirculation branch 115;
e) re-introducing said amount of preheated water from the recirculation branch 115 into the main branch 110 upstream of said first heating device 41.

The present invention also relates to a method for dispensing hot water, comprising the following steps:
f) performing a method for recirculating preheated water according to the present invention;
g) providing an electronic control unit 75 operatively connected to the fluidic water conduit 11;
h) by means of the electronic control unit 75, preferably in response to a hot water dispensing command sent by a user, preferably by means of a user interface, sending a hot water dispensing signal to the fluidic water conduit 11;
i) as a function of said hot water dispensing signal, by means of the first heating device 41 performing a final heating of a volume of water to be dispensed comprising the amount of preheated water reintroduced into the main branch 110 and/or an amount of unheated water entering the main branch 110 from the first water inlet opening 21 to bring it to a predetermined dispensing temperature;
j) allowing heated water at the predetermined dispensing temperature to pass through the hot water dispensing opening 31.

It is apparent that, depending on the volume of water required for the dispensing, the amount of preheated water accumulated in the collection conduit 500 and available for the subsequent final heating may or may not be sufficient to ensure the dispensing of such a volume. It is apparent that, at the same time as the dispensing, the method includes that the main branch 110 continues to receive water entering through the first water inlet opening 21.

Thereby, on the one hand, the constant filling of the main branch 110 is advantageously ensured, avoiding the formation of air bubbles, which would be detrimental to the operation of the heating device. Advantageously, at the same time, such a system theoretically allows the dispensing group to dispense any volume of hot water without interruptions.

Therefore, in an embodiment, the first heating device 41 must be suitable for performing the final heating of a certain amount of water, which is at a preheating temperature, e.g., 60°C, and of a certain amount of water, which is at a reduced temperature instead, e.g., at room temperature, and bringing both such amounts of water to a predetermined dispensing temperature, e.g., 90°C.

In a preferred embodiment, step i) comprises the following sub-steps:
i1) providing a temperature sensor 700 suitable for detecting the temperature of the water at the first heating device 41, which is operatively connected to the electronic control unit 75;
i2) by means of the electronic control unit 75, making a comparison between the temperature detected by said temperature sensor and a minimum preheating temperature;
i3) as a function of said comparison, performing one of the following actions:
i31) if the detected temperature is greater than or equal to said minimum preheating temperature, heating the water by means of the first heating device 41 at a maximum water flow rate, to bring it to the dispensing temperature;
i32) if the detected temperature is lower than the minimum preheating temperature, heating the water by means of the first heating device 41 at a lower water flow rate than the maximum water flow rate, to bring it to the dispensing temperature.

In other words, with the same power, the first heating device 41 is suitable for heating a reduced flow of water - and consequently producing a slower exiting flow of hot water - when the temperature of the water to be heated is below the minimum preheating temperature, and, on the contrary, it is suitable for heating a greater flow of water (e.g., the maximum one) - and consequently, producing a faster exiting flow of hot water - when the temperature of the water to be heated is at least at the minimum preheating temperature.

Clearly, this is due to the fact that, with the same power and working with previously preheated water, the first heating device 41 must perform thereon a reduced heating and therefore, advantageously, it is able to process a greater flow at the dispensing temperature in a shorter time.

Preferably, after step j), the method includes performing again the recirculation method according to the present invention, so as to immediately provide an amount of preheated water for a subsequent dispensing.

Preferably, moreover, the recirculation is also started after not using the dispensing group for a certain time, so as to prevent the deposit and growth of bacterial agents or pathogens in the conduit.

It is apparent that the recirculation is preferably started during the non-working steps of the dispensing group or fluidic water conduit, i.e., when the dispensing of hot water and steam is not required.

It is equally apparent that the method of dispensing hot water can take place at the same time as a method of dispensing steam, consisting of the following steps:
a) providing a hot water and steam dispensing group 1 according to the present invention, where the fluidic water conduit 11 and the fluidic steam conduit 12 are thermally and fluidically separate;
m) dispensing water into the fluidic steam conduit 12 through the second water inlet opening 22;
n) by means of the second heating device 42, heating the water in the fluidic steam conduit 12 at a steam dispensing temperature, so as to generate steam;
∘) dispensing steam by means of the steam dispensing opening 32.

It is apparent that the dispensing group according to the present invention is suitable for operating as an independent unit or for being integrated into household appliances with other functionalities, e.g., integrated into a domestic or professional coffee machine.

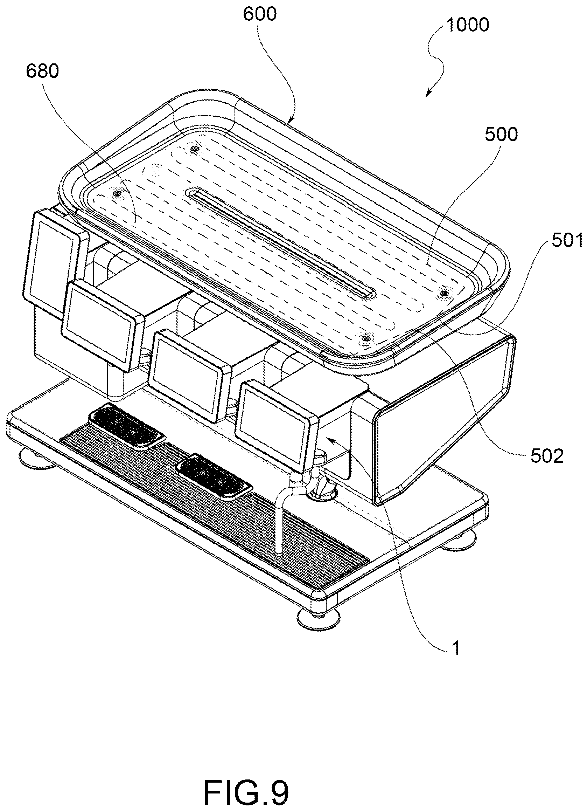

Therefore, the present invention also relates to a coffee machine 1000, for example shown in an embodiment in figure 9, comprising a coffee dispensing unit and a dispensing group 1 according to the present invention.

Innovatively, the present invention overcomes the drawbacks of the typical dispensing groups of the prior art.

In fact, advantageously, by virtue of the technical features described in this document, the fluidic water conduit according to the present invention allows significantly improving the efficiency of the water and steam dispensing system.

According to a surprising advantage, by virtue of the presence of a recirculation branch in the fluidic water conduit, the hot water dispensing time is reduced. In other words, the possibility of always providing a certain amount of preheated water, allows applying only a minimum final heating, to bring such water to the dispensing temperature and consequently, with the same power as the heating device, the present dispensing group allows dispensing a greater water flow at the dispensing temperature in a shorter time.

Thereby, the delay - i.e., the waiting time - between the dispensing command and the dispensing is reduced.

Moreover, in relation to such an advantage, note the convenience of being able to use a heater with reduced power with respect to the heaters used in the prior art, for providing hot water at the same dispensing temperature.

Moreover, the collection conduit in the fluidic water conduit advantageously allows utilizing the heat of combustion of the preheated water accumulated in such a conduit for heating further parts of the dispensing group or the coffee machine, e.g., for heating a cup holder plate, so as to have preheated mugs and cups ready to receive the hot beverages.

Hence, this advantageously allows abandoning auxiliary heating systems for heating the cup holder unit and therefore a great saving in resources.

Moreover, the fluidic and electrical design of the whole dispensing group is conveniently simplified.

According to a further advantage, by virtue of the presence of two fluidic water and steam conduits, which are completely fluidically and thermally separate, the dispensing group allows simultaneously dispensing hot water and steam at the standard dispensing flow rates.

According to an even further advantage, the provision of two fluidically and thermally separate fluidic conduits allows operating on the parameters for dispensing hot water and steam (such as, the flow rate, temperature, pressure, dispensing speed, for example) completely independently.

Clearly, this allows regulating each dispensing according to the user's specific needs without influencing the parameters of the dispensing, taking place in parallel.

It is apparent that, in order to meet specific needs, those skilled in the art may make variations to the embodiments of the aforesaid dispensing group and the aforesaid coffee machine, or replace elements with others which are functionally equivalent.

Such variations are also contained within the scope of protection as defined by the following claims.

### List of reference signs:

1 dispensing group
11 fluidic water conduit
12 fluidic steam conduit
110 main branch
115 recirculation branch
120 preheating stretch
125 tapping branch
21 first water inlet opening
22 second water inlet opening
200 discharge branch
31 hot water dispensing opening
32 steam dispensing opening
300 emission node
41 first heating device
42 second heating device
50 tank
500 collection conduit
501 first end
502 second end
510 linear stretches
520 curvilinear stretches
550 exchange wall
61 first pump
62 second pump
600 cup holder unit
650 heating chamber
680 cup holder plate
71 flow regulating element
72 overpressure relief valve
74 non-return valves
75 electronic control unit
76 auxiliary regulating element
77 steam regulating element
700 temperature sensor
702 steam temperature sensors
8 flow rate measurer
9 junction conduit
90 first end
99 second end
L storage length
X prevalent flow direction
D transverse dimension

## Claims

1. A fluidic water conduit (11) for dispensing hot water, comprising:
- a main branch (110) extending between a first water inlet opening (21) and a hot water dispensing opening (31) and which is suitable for receiving water through said first water inlet opening (21) and allowing said water to flow towards said hot water dispensing opening (31);
- a first heating device (41), operatively connected to said main branch (110) and suitable for heating the water flowing into said main branch (110) before it reaches said hot water dispensing opening (31);
- a recirculation branch (115), which fluidically originates from said main branch (110) downstream of the first heating device (41) and upstream of the hot water dispensing opening (31) and which is fluidically reintroduced into said main branch (110) upstream of said first heating device (41),
**characterized in that** the main branch (110) comprises a collection conduit (500), suitable for accumulating water preheated by the first heating device (41) and reintroduced into the main branch (110) by means of the recirculation branch (115), said collection conduit (500) being at least partially thermally conductive for allowing the transmission of heat of the heated hot water accumulated in the collection conduit (500), towards the environment.

2. Fluidic water conduit (11) according to the preceding claim, comprising a first pump (61), preferably a rotary pump, installed upstream of the first heating device (41) and suitable for pushing water into the main branch (110) towards said first heating device (41).

3. Fluidic water conduit (11) according to claim 2, wherein the recirculation branch (115) is reintroduced into the main branch (110) upstream of said first pump (61) and wherein the collection conduit (500) is interposed between the first pump (61) and the first heating device (41).

4. Fluidic water conduit (11) according to claim 3, wherein the collection conduit (500) extends from a first end (501) to a second end (502) and wherein, at said first and second ends (501, 502), the fluidic water conduit (11) comprises non-return valves (74) suitable for being opened and closed, respectively, for allowing or blocking the passage of preheated water from the recirculation branch to the collection conduit (500) and from the collection conduit (500) towards the first heating device (41).

5. Fluidic water conduit (11) according to any one of the preceding claims, wherein the collection conduit (500) is a tube extending for a collection length (L) along a prevalent flow direction (X) and having a cross-section on a plane transversal to said prevalent flow direction (X) defined by a transversal dimension (D), wherein said collection length (L) is much greater than said transversal dimension (D).

6. Fluidic water conduit (11) according to the preceding claim, wherein the collection length (L) is at least ten times the transversal dimension (D), preferably at least fifty times the transversal dimension (D), even more preferably, at least one hundred times the transversal dimension (D).

7. Fluidic water conduit (11) according to any one of the preceding claims, wherein the collection conduit (500) has a snakelike development, i.e., it forms a fluidic serpentine, comprising linear stretches (510) interspersed with curvilinear stretches (520).

8. Fluidic water conduit (11) according to any one of the preceding claims, wherein the main branch (110) comprises an emission node (300) downstream of the first heating device (41) and upstream of the hot water dispensing opening (31), wherein the recirculation branch (115) fluidically originates from the main branch (110) at said emission node (300), and wherein the fluidic conduit (11) comprises a flow regulating element (71) in correspondence of said emission node (300), suitable for regulating the water flow from the main branch (110) towards the hot water dispensing opening (31) or towards the recirculation branch (115).

9. Fluidic water conduit (11) according to the preceding claim, comprising an electronic control unit (75) operatively connected to said flow regulating element (71) and configured to process and send to said flow regulating element (71):
- a dispensing signal, for allowing the passage of water from the main branch (110) towards the hot water dispensing opening (31); or
- a recirculation signal, for allowing the passage of water from the main branch (110) towards the recirculation branch (115).

10. A dispensing group (1) for dispensing hot water, comprising a fluidic water conduit (11) according to any one of the preceding claims and a cup holder unit (600) positioned in proximity to the collection conduit (500) so that the heating of at least one surface of said cup holder unit (600) is allowed by means of the transmission of heat from the water contained in said collection conduit (500) towards said cup holder unit (600).

11. Dispensing group (1) according to the preceding claim, wherein the cup holder unit (600) comprises and delimits therein a heating chamber (650) suitable for accommodating the collection conduit (500) and closed at the top by means of a cup holder plate (680), so as to conceal the collection conduit (500) from user's sight, wherein said cup holder plate (680) is suitable for holding cups, small cups, glasses, to be heated.

12. Dispensing group (1) according to claim 10 or 11, comprising:
a fluidic steam conduit (12) extending between a second water inlet opening (22) and a steam dispensing opening (32), said fluidic steam conduit (12) being suitable for receiving water through said second water inlet opening (22) and allowing said water to flow towards said steam dispensing opening (32);
- a second heating device (42), operatively connected to said fluidic steam conduit (12) and suitable for heating the water flowing into said fluidic steam conduit (12) to generate steam, before it reaches said steam dispensing opening (32),
so that the dispensing group (1) is also suitable for dispensing steam, through the steam dispensing opening (32), which is different from the hot water dispensing opening (31).

13. Dispensing group (1) according to claim 12, wherein the fluidic water conduit (11) and the fluidic steam conduit (12) are fluidically and thermally separate from each other in the path thereof respectively between the first water inlet opening (21) and the hot water dispensing opening (31) and between the second water inlet opening (22) and the steam dispensing opening (32).

14. Dispensing group (1) according to claim 13, wherein the fluidic steam conduit (12) comprises a preheating stretch (120) passing in proximity to the collection conduit (500), so that the collection conduit (500) allows heat to be transferred from the preheated water therein, to the preheating stretch (120), so as to ensure a preheating minimum also of the water passing into the fluidic steam conduit (12).

15. Dispensing group (1) according to claim 12, wherein the fluidic steam conduit (12) is connected to the fluidic water conduit (11) at, or downstream of the collection conduit (500), i.e. wherein the fluidic steam conduit (12) is connected to the collection conduit (500) and is suitable for receiving water from the collection conduit (500) through the second water inlet opening (22), so that the fluidic steam conduit (12) receives water that has been pre-heated by means of the first heating device (41) in the fluidic water conduit (11) and performs a final heating by means of the second heating device (42) to transform the preheated water into steam.

16. A method of recirculating pre-heated water comprising the following steps:
a) providing a fluidic water conduit (11) according to any one of claims 1 to 9;
b) allowing water to pass into the main branch (110) from the first water inlet opening (21) towards the hot water dispensing opening (31);
c) by means of the first heating device (41), preheating the water crossing said main branch (110) to generate an amount of water pre-heated at a predetermined pre-heating temperature;
d) blocking the passage of said amount of preheated water towards the hot water dispensing opening (31) and allowing said amount of preheated water to pass from the main branch (110), downstream of the first heating device (41), into the recirculation branch (115);
e) re-introducing said amount of water pre-heated water by the recirculation branch (115) into the main branch (110) upstream of said first heating device (41).

17. A method of dispensing hot water, comprising the following steps:
f) performing a method of recirculating preheated water according to claim 16;
g) providing an electronic control unit (75) operatively connected to the fluidic water conduit (11);
h) by means of the electronic control unit (75), preferably in response to a hot water dispensing command sent by a user, preferably by means of a user interface, sending a hot water dispensing signal to the fluidic water conduit (11);
i) as a function of said hot water dispensing signal, by means of the first heating device (41) performing a final heating of a volume of water to be dispensed comprising the amount of preheated water reintroduced into the main branch (110) and/or an amount of unheated water entering the main branch (110) from the first water inlet opening (21) to bring it to a predetermined dispensing temperature;
j) allowing the passage of water heated to the predetermined dispensing temperature through the hot water dispensing opening (31).

18. Method of dispensing hot water according to the preceding claim, wherein step i) comprises the following sub-steps:
i1) providing a temperature sensor (700) suitable for detecting the temperature of the water at the first heating device (41) and operatively connected to the electronic control unit (75);
i2) by means of the electronic control unit (75), making a comparison between the temperature detected by said temperature sensor and a minimum preheating temperature;
i3) as a function of said comparison, performing one of the following actions:
i31) if the temperature detected is greater than or equal to said minimum preheating temperature, heating the water by means of the first heating device (41) on a maximum water flow rate, to bring it to the dispensing temperature;
i32) if the temperature detected is less than the minimum preheating temperature, heating the water by means of the first heating device (41) on a water flow rate that is less than the maximum water flow rate, to bring it to the dispensing temperature.

19. Method of dispensing hot water, according to claim 17 or 18, preferably comprising, after step j), actuating the recirculation method again according to claim 16, so as to immediately provide an amount of preheated water for a successive dispensing.

20. A coffee machine (1000) comprising a coffee dispensing unit and a hot water dispensing group (1) according to any one of claims 10 to 15.

## Patentansprüche

1. Fluidische Wasserleitung (11) zur Ausgabe von Heißwasser, umfassend:
- einen Hauptzweig (110), der sich zwischen einer ersten Wassereinlassöffnung (21) und einer Heißwasserausgabeöffnung (31) erstreckt und der dazu geeignet ist, Wasser durch die erste Wassereinlassöffnung (21) aufzunehmen und das Wasser in Richtung der Heißwasserausgabeöffnung (31) fließen zu lassen;
- eine erste Heizvorrichtung (41), die funktional mit dem Hauptzweig (110) verbunden und dazu geeignet ist, das in den Hauptzweig (110) fließende Wasser zu erwärmen, bevor es die Heißwasserausgabeöffnung (31) erreicht;
- einen Rezirkulationszweig (115), der fluidisch stromabwärts der ersten Heizvorrichtung (41) und stromaufwärts der Heißwasserausgabeöffnung (31) von dem Hauptzweig (110) ausgeht und der fluidisch stromaufwärts der ersten Heizvorrichtung (41) wieder in den Hauptzweig (110) eingeleitet wird,
**dadurch gekennzeichnet, dass**
der Hauptzweig (110) eine Sammelleitung (500) umfasst, die dazu geeignet ist, durch die erste Heizvorrichtung (41) vorgewärmtes und mittels des Rezirkulationszweigs (115) in den Hauptzweig (110) wieder eingeleitetes Wasser anzusammeln, wobei die Sammelleitung (500) zumindest teilweise wärmeleitfähig ist, um die Übertragung von Wärme des in der Sammelleitung (500) angesammelten erwärmten Heißwassers an die Umgebung zu ermöglichen.

2. Fluidische Wasserleitung (11) nach dem vorhergehenden Anspruch, umfassend eine erste Pumpe (61), vorzugsweise eine Rotationspumpe, die stromaufwärts der ersten Heizvorrichtung (41) installiert und dazu geeignet ist, Wasser im Hauptzweig (110) in Richtung der ersten Heizvorrichtung (41) zu drücken.

3. Fluidische Wasserleitung (11) nach Anspruch 2, wobei der Rezirkulationszweig (115) stromaufwärts der ersten Pumpe (61) wieder in den Hauptzweig (110) eingeleitet wird und wobei die Sammelleitung (500) zwischen der ersten Pumpe (61) und der ersten Heizvorrichtung (41) angeordnet ist.

4. Fluidische Wasserleitung (11) nach Anspruch 3, wobei sich die Sammelleitung (500) von einem ersten Ende (501) zu einem zweiten Ende (502) erstreckt und wobei die fluidische Wasserleitung (11) an dem ersten und dem zweiten Ende (501, 502) Rückschlagventile (74) umfasst, die dazu geeignet sind, jeweils geöffnet und geschlossen zu werden, um den Durchgang von vorgewärmtem Wasser aus dem Rezirkulationszweig zur Sammelleitung (500) und von der Sammelleitung (500) in Richtung der ersten Heizvorrichtung (41) zu ermöglichen oder zu blockieren.

5. Fluidische Wasserleitung (11) nach einem der vorhergehenden Ansprüche, wobei die Sammelleitung (500) ein Rohr ist, das sich über eine Sammellänge (L) entlang einer Hauptströmungsrichtung (X) erstreckt und einen Querschnitt in einer Ebene quer zu der Hauptströmungsrichtung (X) aufweist, der durch eine Querabmessung (D) definiert ist, wobei die Sammellänge (L) viel größer als die Querabmessung (D) ist.

6. Fluidische Wasserleitung (11) nach dem vorhergehenden Anspruch, wobei die Sammellänge (L) mindestens das Zehnfache der Querabmessung (D) beträgt, vorzugsweise mindestens das Fünfzigfache der Querabmessung (D), noch bevorzugter mindestens das Hundertfache der Querabmessung (D).

7. Fluidische Wasserleitung (11) nach einem der vorhergehenden Ansprüche, wobei die Sammelleitung (500) einen schlangenförmigen Verlauf aufweist, d. h. eine fluidische Serpentine bildet, die lineare Abschnitte (510) umfasst, die mit krummlinigen Abschnitten (520) durchsetzt sind.

8. Fluidische Wasserleitung (11) nach einem der vorhergehenden Ansprüche, wobei der Hauptzweig (110) einen Emissionsknoten (300) stromabwärts der ersten Heizvorrichtung (41) und stromaufwärts der Heißwasserausgabeöffnung (31) umfasst, wobei der Rezirkulationszweig (115) an dem Emissionsknoten (300) fluidisch von dem Hauptzweig (110) ausgeht und wobei die Fluidleitung (11) ein Durchflussregulierungselement (71) in Entsprechung zu dem Emissionsknoten (300) umfasst, das dazu geeignet ist, den Wasserfluss von dem Hauptzweig (110) in Richtung der Heißwasserausgabeöffnung (31) oder in Richtung des Rezirkulationszweigs (115) zu regulieren.

9. Fluidische Wasserleitung (11) nach dem vorhergehenden Anspruch, umfassend eine elektronische Steuereinheit (75), die funktional mit dem Durchflussregulierungselement (71) verbunden und konfiguriert ist, um Folgendes zu verarbeiten und an das Durchflussregulierungselement (71) zu senden:
- ein Ausgabesignal, um den Durchgang von Wasser aus dem Hauptzweig (110) in Richtung der Heißwasserausgabeöffnung (31) zu ermöglichen; oder
- ein Rezirkulationssignal, um den Durchgang von Wasser aus dem Hauptzweig (110) in Richtung des Rezirkulationszweigs (115) zu ermöglichen.

10. Ausgabegruppe (1) zur Ausgabe von Heißwasser, umfassend eine fluidische Wasserleitung (11) nach einem der vorhergehenden Ansprüche und eine Tassenhaltereinheit (600), die in der Nähe der Sammelleitung (500) positioniert ist, so dass die Erwärmung mindestens einer Oberfläche der Tassenhaltereinheit (600) mittels der Übertragung von Wärme von dem in der Sammelleitung (500) enthaltenen Wasser in Richtung der Tassenhaltereinheit (600) ermöglicht wird.

11. Ausgabegruppe (1) nach dem vorhergehenden Anspruch, wobei die Tassenhaltereinheit (600) darin eine Heizkammer (650) umfasst und begrenzt, die dazu geeignet ist, die Sammelleitung (500) aufzunehmen, und die oben mittels einer Tassenhalterplatte (680) verschlossen ist, um die Sammelleitung (500) vor dem Blick des Benutzers zu verbergen, wobei die Tassenhalterplatte (680) dazu geeignet ist, Tassen, kleine Tassen, Gläser zu halten, die erwärmt werden sollen.

12. Ausgabegruppe (1) nach Anspruch 10 oder 11, die ferner umfasst:
eine fluidische Dampfleitung (12), die sich zwischen einer zweiten Wassereinlassöffnung (22) und einer Dampfausgabeöffnung (32) erstreckt, wobei die fluidische Dampfleitung (12) dazu geeignet ist, Wasser durch die zweite Wassereinlassöffnung (22) aufzunehmen und dieses Wasser in Richtung der Dampfausgabeöffnung (32) fließen zu lassen;
- eine zweite Heizvorrichtung (42), die funktional mit der fluidischen Dampfleitung (12) verbunden und dazu geeignet ist, das in die fluidische Dampfleitung (12) fließende Wasser zu erwärmen, um Dampf zu erzeugen, bevor es die Dampfausgabeöffnung (32) erreicht,
so dass die Ausgabegruppe (1) auch dazu geeignet ist, Dampf durch die Dampfausgabeöffnung (32) auszugeben, die sich von der Heißwasserausgabeöffnung (31) unterscheidet.

13. Ausgabegruppe (1) nach Anspruch 12, wobei die fluidische Wasserleitung (11) und die fluidische Dampfleitung (12) in deren Weg jeweils zwischen der ersten Wassereinlassöffnung (21) und der Heißwasserausgabeöffnung (31) bzw. zwischen der zweiten Wassereinlassöffnung (22) und der Dampfausgabeöffnung (32) fluidisch und thermisch voneinander getrennt sind.

14. Ausgabegruppe (1) nach Anspruch 13, wobei die fluidische Dampfleitung (12) einen Vorwärmabschnitt (120) umfasst, der in der Nähe der Sammelleitung (500) verläuft, so dass die Sammelleitung (500) ermöglicht, dass Wärme von dem darin befindlichen vorgewärmten Wasser auf den Vorwärmabschnitt (120) übertragen wird, um eine Mindestvorwärmung auch des in die fluidische Dampfleitung (12) fließenden Wassers zu gewährleisten.

15. Ausgabegruppe (1) nach Anspruch 12, wobei die fluidische Dampfleitung (12) an oder stromabwärts der Sammelleitung (500) mit der fluidischen Wasserleitung (11) verbunden ist, d. h. wobei die fluidische Dampfleitung (12) mit der Sammelleitung (500) verbunden ist und dazu geeignet ist, Wasser von der Sammelleitung (500) durch die zweite Wassereinlassöffnung (22) aufzunehmen, so dass die fluidische Dampfleitung (12) Wasser aufnimmt, das mittels der ersten Heizvorrichtung (41) in der fluidischen Wasserleitung (11) vorgewärmt wurde, und eine abschließende Erwärmung mittels der zweiten Heizvorrichtung (42) durchführt, um das vorgewärmte Wasser in Dampf umzuwandeln.

16. Verfahren zur Rezirkulation von vorgewärmtem Wasser, das die folgenden Schritte umfasst:
a) Bereitstellen einer fluidischen Wasserleitung (11) nach einem der Ansprüche 1 bis 9;
b) Ermöglichen, dass Wasser aus der ersten Wassereinlassöffnung (21) in den Hauptzweig (110) in Richtung der Heißwasserausgabeöffnung (31) fließen kann;
c) mittels der ersten Heizvorrichtung (41), Vorwärmen des den Hauptzweig (110) durchquerenden Wassers, um eine Menge an Wasser zu erzeugen, das auf eine vorbestimmte Vorwärmtemperatur vorgewärmt ist;
d) Blockieren des Durchgangs der Menge an vorgewärmtem Wasser in Richtung der Heißwasserausgabeöffnung (31) und Ermöglichen, dass die Menge an vorgewärmtem Wasser aus dem Hauptzweig (110) stromabwärts der ersten Heizvorrichtung (41) in den Rezirkulationszweig (115) fließt;
e) Wiedereinleiten der Menge an vorgewärmtem Wasser durch den Rezirkulationszweig (115) in den Hauptzweig (110) stromaufwärts der ersten Heizvorrichtung (41).

17. Verfahren zur Ausgabe von Heißwasser, das die folgenden Schritte umfasst:
f) Durchführen eines Verfahrens zur Rezirkulation von vorgewärmtem Wasser nach Anspruch 16;
g) Bereitstellen einer elektronischen Steuereinheit (75), die funktional mit der fluidischen Wasserleitung (11) verbunden ist;
h) mittels der elektronischen Steuereinheit (75), vorzugsweise als Reaktion auf einen von einem Benutzer gesendeten Heißwasserausgabebefehl, vorzugsweise mittels einer Benutzerschnittstelle, Senden eines Heißwasserausgabesignals an die fluidische Wasserleitung (11);
i) in Abhängigkeit von dem Heißwasserausgabesignal, Durchführen einer abschließenden Erwärmung eines auszugebenden Wasservolumens mittels der ersten Heizvorrichtung (41), das die in den Hauptzweig (110) wieder eingeleitete Menge an vorgewärmtem Wasser und/oder eine Menge an nicht erwärmtem Wasser umfasst, das aus der ersten Wassereinlassöffnung (21) in den Hauptzweig (110) eintritt, um es auf eine vorbestimmte Ausgabetemperatur zu bringen;
j) Ermöglichen des Durchgangs von auf die vorbestimmte Ausgabetemperatur erwärmtem Wasser durch die Heißwasserausgabeöffnung (31).

18. Verfahren zur Ausgabe von Heißwasser nach dem vorhergehenden Anspruch, wobei Schritt i) die folgenden Teilschritte umfasst:
i1) Bereitstellen eines Temperatursensors (700), der dazu geeignet ist, die Temperatur des Wassers an der ersten Heizvorrichtung (41) zu erfassen und funktional mit der elektronischen Steuereinheit (75) verbunden ist;
i2) mittels der elektronischen Steuereinheit (75), Durchführen eines Vergleichs zwischen der von dem Temperatursensor erfassten Temperatur und einer Mindestvorwärmtemperatur;
i3) in Abhängigkeit von dem Vergleich, Durchführen einer der folgenden Vorgänge:
i31) wenn die erfasste Temperatur höher als oder gleich der Mindestvorwärmtemperatur ist, Erwärmen des Wassers mittels der ersten Heizvorrichtung (41) bei einer maximalen Wasserdurchflussrate, um es auf die Ausgabetemperatur zu bringen;
i32) wenn die erfasste Temperatur niedriger als die Mindestvorwärmtemperatur ist, Erwärmen des Wassers mittels der ersten Heizvorrichtung (41) bei einer Wasserdurchflussrate, die niedriger als die maximale Wasserdurchflussrate ist, um es auf die Ausgabetemperatur zu bringen.

19. Verfahren zur Ausgabe von Heißwasser nach Anspruch 17 oder 18, vorzugsweise umfassend, nach Schritt j), das erneute Betätigen des Rezirkulationsverfahrens nach Anspruch 16, um sofort eine Menge an vorgewärmtem Wasser für eine nachfolgende Ausgabe bereitzustellen.

20. Kaffeemaschine (1000), umfassend eine Kaffeeausgabeeinheit und eine Heißwasserausgabegruppe (1) nach einem der Ansprüche 10 bis 15.

## Revendications

1. Conduit de fluide d'eau (11) pour distribuer de l'eau chaude, comprenant :
- une branche principale (110) s'étendant entre une première ouverture d'entrée d'eau (21) et une ouverture de distribution d'eau chaude (31) et qui est appropriée pour recevoir de l'eau à travers ladite première ouverture d'entrée d'eau (21) et permettre à ladite eau de s'écouler vers ladite ouverture de distribution d'eau chaude (31) ;
- un premier dispositif de chauffage (41), fonctionnellement relié à ladite branche principale (110) et approprié pour chauffer l'eau s'écoulant dans ladite branche principale (110) avant qu'elle n'atteigne ladite ouverture de distribution d'eau chaude (31) ;
- une branche de recirculation (115), qui provient fluidiquement de ladite branche principale (110) en aval du premier dispositif de chauffage (41) et en amont de l'ouverture de distribution d'eau chaude (31) et qui est réintroduite fluidiquement dans ladite branche principale (110) en amont dudit premier dispositif de chauffage (41),
**caractérisé en ce que**
la branche principale (110) comprend un conduit de collecte (500), approprié pour accumuler de l'eau préchauffée par le premier dispositif de chauffage (41) et réintroduite dans la branche principale (110) au moyen de la branche de recirculation (115), ledit conduit de collecte (500) étant au moins partiellement conducteur thermique pour permettre la transmission de la chaleur de l'eau chaude chauffée accumulée dans le conduit de collecte (500), vers l'environnement.

2. Conduit de fluide d'eau (11) selon la revendication précédente, comprenant une première pompe (61), de préférence une pompe rotative, installée en amont du premier dispositif de chauffage (41) et appropriée pour pousser l'eau dans la branche principale (110) vers ledit premier dispositif de chauffage (41).

3. Conduit de fluide d'eau (11) selon la revendication 2, dans lequel la branche de recirculation (115) est réintroduite dans la branche principale (110) en amont de ladite première pompe (61) et dans lequel le conduit de collecte (500) est interposé entre la première pompe (61) et le premier dispositif de chauffage (41).

4. Conduit de fluide d'eau (11) selon la revendication 3, dans lequel le conduit de collecte (500) s'étend d'une première extrémité (501) à une deuxième extrémité (502) et dans lequel, auxdites première et deuxième extrémités (501, 502), le conduit de fluide d'eau (11) comprend des clapets anti-retour (74) appropriés pour être ouverts et fermés, respectivement, pour permettre ou bloquer le passage de l'eau préchauffée de la branche de recirculation vers le conduit de collecte (500) et du conduit de collecte (500) vers le premier dispositif de chauffage (41).

5. Conduit de fluide d'eau (11) selon l'une quelconque des revendications précédentes, dans lequel le conduit de collecte (500) est un tube s'étendant sur une longueur de collecte (L) le long d'une direction d'écoulement prédominante (X) et ayant une section transversale sur un plan transversal à ladite direction d'écoulement prédominante (X) définie par une dimension transversale (D), dans lequel ladite longueur de collecte (L) est beaucoup plus grande que ladite dimension transversale (D).

6. Conduit de fluide d'eau (11) selon la revendication précédente, dans lequel la longueur de collecte (L) est au moins dix fois la dimension transversale (D), de préférence au moins cinquante fois la dimension transversale (D), encore plus préférablement, au moins cent fois la dimension transversale (D).

7. Conduit de fluide d'eau (11) selon l'une quelconque des revendications précédentes, dans lequel le conduit de collecte (500) a un développement en serpentin, c'est-à-dire qu'il forme une serpentine fluidique, comprenant des tronçons linéaires (510) entrecoupés de tronçons curvilignes (520).

8. Conduit de fluide d'eau (11) selon l'une quelconque des revendications précédentes, dans lequel la branche principale (110) comprend un nœud d'émission (300) en aval du premier dispositif de chauffage (41) et en amont de l'ouverture de distribution d'eau chaude (31), dans lequel la branche de recirculation (115) provient fluidiquement de la branche principale (110) au niveau dudit nœud d'émission (300), et dans lequel le conduit fluidique (11) comprend un élément de régulation de débit (71) en correspondance avec ledit nœud d'émission (300), approprié pour réguler le débit d'eau de la branche principale (110) vers l'ouverture de distribution d'eau chaude (31) ou vers la branche de recirculation (115).

9. Conduit de fluide d'eau (11) selon la revendication précédente, comprenant une unité de commande électronique (75) fonctionnellement reliée audit élément de régulation de débit (71) et configurée pour traiter et envoyer audit élément de régulation de débit (71) :
un signal de distribution, pour permettre le passage de l'eau de la branche principale (110) vers l'ouverture de distribution d'eau chaude (31) ; ou
- un signal de recirculation, pour permettre le passage de l'eau de la branche principale (110) vers la branche de recirculation (115).

10. Groupe de distribution (1) pour distribuer de l'eau chaude, comprenant un conduit de fluide d'eau (11) selon l'une quelconque des revendications précédentes et une unité porte-tasse (600) positionnée à proximité du conduit de collecte (500) de sorte que le chauffage d'au moins une surface de ladite unité porte-tasse (600) est permis au moyen de la transmission de chaleur de l'eau contenue dans ledit conduit de collecte (500) vers ladite unité porte-tasse (600).

11. Groupe de distribution (1) selon la revendication précédente, dans lequel l'unité porte-tasse (600) comprend et délimite en son sein une chambre de chauffage (650) appropriée pour loger le conduit de collecte (500) et fermée au niveau de la partie supérieure au moyen d'une plaque porte-tasse (680), de manière à masquer le conduit de collecte (500) à la vue de l'utilisateur, dans lequel ladite plaque porte-tasse (680) est appropriée pour supporter des tasses, des petites tasses, des verres, à chauffer.

12. Groupe de distribution (1) selon la revendication 10 ou 11, comprenant :
un conduit de fluide de vapeur (12) s'étendant entre une deuxième ouverture d'entrée d'eau (22) et une ouverture de distribution de vapeur (32), ledit conduit de fluide de vapeur (12) étant approprié pour recevoir de l'eau à travers ladite deuxième ouverture d'entrée d'eau (22) et permettant à ladite eau de s'écouler vers ladite ouverture de distribution de vapeur (32) ;
- un deuxième dispositif de chauffage (42), fonctionnellement relié audit conduit de fluide de vapeur (12) et approprié pour chauffer l'eau s'écoulant dans ledit conduit de fluide de vapeur (12) pour générer de la vapeur, avant qu'elle n'atteigne ladite ouverture de distribution de vapeur (32),
de sorte que le groupe de distribution (1) est également approprié pour distribuer de la vapeur, à travers l'ouverture de distribution de vapeur (32), qui est différente de l'ouverture de distribution d'eau chaude (31).

13. Groupe de distribution (1) selon la revendication 12, dans lequel le conduit de fluide d'eau (11) et le conduit de fluide de vapeur (12) sont séparés fluidiquement et thermiquement l'un de l'autre dans leur trajet respectivement entre la première ouverture d'entrée d'eau (21) et l'ouverture de distribution d'eau chaude (31) et entre la deuxième ouverture d'entrée d'eau (22) et l'ouverture de distribution de vapeur (32).

14. Groupe de distribution (1) selon la revendication 13, dans lequel le conduit de fluide de vapeur (12) comprend un tronçon de préchauffage (120) passant à proximité du conduit de collecte (500), de sorte que le conduit de collecte (500) permet de transférer de la chaleur depuis l'eau préchauffée s'y trouvant vers le tronçon de préchauffage (120), de manière à assurer un préchauffage minimum également de l'eau passant dans le conduit de fluide de vapeur (12).

15. Groupe de distribution (1) selon la revendication 12, dans lequel le conduit de fluide de vapeur (12) est relié au conduit de fluide d'eau (11) au niveau, ou en aval du conduit de collecte (500), c'est-à-dire dans lequel le conduit de fluide de vapeur (12) est relié au conduit de collecte (500) et est approprié pour recevoir de l'eau du conduit de collecte (500) à travers la deuxième ouverture d'entrée d'eau (22), de sorte que le conduit de fluide de vapeur (12) reçoit de l'eau qui a été préchauffée au moyen du premier dispositif de chauffage (41) dans le conduit de fluide d'eau (11) et effectue un chauffage final au moyen du deuxième dispositif de chauffage (42) pour transformer l'eau préchauffée en vapeur.

16. Procédé de recirculation d'eau préchauffée comprenant les étapes suivantes :
a) prévoir un conduit de fluide d'eau (11) selon l'une quelconque des revendications 1 à 9 ;
b) permettre à l'eau de passer dans la branche principale (110) de la première ouverture d'entrée d'eau (21) vers l'ouverture de distribution d'eau chaude (31) ;
c) au moyen du premier dispositif de chauffage (41), préchauffer l'eau traversant ladite branche principale (110) pour générer une quantité d'eau préchauffée à une température de préchauffage prédéterminée ;
d) bloquer le passage de ladite quantité d'eau préchauffée vers l'ouverture de distribution d'eau chaude (31) et permettre à ladite quantité d'eau préchauffée de passer de la branche principale (110), en aval du premier dispositif de chauffage (41), dans la branche de recirculation (115) ;
e) réintroduire ladite quantité d'eau eau préchauffée par la branche de recirculation (115) dans la branche principale (110) en amont dudit premier dispositif de chauffage (41).

17. Procédé de distribution d'eau chaude, comprenant les étapes suivantes :
f) mettre en œuvre un procédé de recirculation d'eau préchauffée selon la revendication 16;
g) prévoir une unité de commande électronique (75) fonctionnellement reliée au conduit de fluide d'eau (11);
h) au moyen de l'unité de commande électronique (75), de préférence en réponse à une commande de distribution d'eau chaude envoyée par un utilisateur, de préférence au moyen d'une interface utilisateur, envoyer un signal de distribution d'eau chaude au conduit de fluide d'eau (11);
i) en fonction dudit signal de distribution d'eau chaude, au moyen du premier dispositif de chauffage (41) effectuant un chauffage final d'un volume d'eau à distribuer comprenant la quantité d'eau préchauffée réintroduite dans la branche principale (110) et/ou une quantité d'eau non chauffée entrant dans la branche principale (110) à partir de la première ouverture d'entrée d'eau (21) pour l'amener à une température de distribution prédéterminée;
j) permettre le passage de l'eau chauffée à la température de distribution prédéterminée à travers l'ouverture de distribution d'eau chaude (31).

18. Procédé de distribution d'eau chaude selon la revendication précédente, dans lequel l'étape i) comprend les sous-étapes suivantes :
i1) prévoir un capteur de température (700) approprié pour détecter la température de l'eau au niveau du premier dispositif de chauffage (41) et relié fonctionnellement à l'unité de commande électronique (75) ;
i2) au moyen de l'unité de commande électronique (75), faire une comparaison entre la température détectée par ledit capteur de température et une température de préchauffage minimale ;
i3) en fonction de ladite comparaison, effectuer l'une des actions suivantes :
i31) si la température détectée est supérieure ou égale à ladite température minimale de préchauffage, chauffer l'eau au moyen du premier dispositif de chauffage (41) à un débit d'eau maximal, pour l'amener à la température de distribution ;
i32) si la température détectée est inférieure à la température de préchauffage minimale, chauffer l'eau au moyen du premier dispositif de chauffage (41) à un débit d'eau inférieur au débit d'eau maximal, pour l'amener à la température de distribution.

19. Procédé de distribution d'eau chaude, selon la revendication 17 ou 18, comprenant de préférence, après l'étape j), l'actionnement du procédé de recirculation à nouveau selon la revendication 16, de manière à fournir immédiatement une quantité d'eau préchauffée pour une distribution successive.

20. Machine à café (1000) comprenant une unité de distribution de café et un groupe de distribution d'eau chaude (1) selon l'une quelconque des revendications 10 à 15.
